# EUROPEAN PATENT APPLICATION

(11) **EP 0 686 929 A1**
(43) Date of publication of application: **13.12.1995**
(21) Application number: 94830279.9
(22) Date of filing: 07.06.1994
(51) Int. Cl.: G06K 7/10

(54) **Apparatus for reading out optically detected characters reproduced on sheets or parts thereof**

(71) Applicant: TEAN AG, CH-6900 Lugano (CH)
(72) Inventor: Tschudi, Nicola, Lugano (CH)
(74) Representative: Cicogna, Franco

(57) **Abstract**

The present invention relates to an apparatus for reading out optically detected characters reproduced on sheets or parts thereof, which comprises a supporting panel (3), on which can be supported the sheet element to be read-out.

This panel is made of a clear material and thereunder is arranged a read-out device (5), comprising a decoding apparatus (6) facing the supporting panel and mounted on a supporting element (7) which can be driven so as to scan substantially the overall surface of the sheet supported on the supporting panel.

## Description

### BACKGROUND OF THE INVENTION

The present invention relates to an apparatus for reading out optically detected characters reproduced on sheets or parts thereof.

As is known there are frequently used sheets and/or documents, or printed articles, thereon there are reproduced codes which can be detected by means of optically detecting devices and which codes are usually called "bar codes".

These codes are frequently reproduced on documents or printed sheets thereon, in addition to the mentioned bar codes, there are also provided wordings or the like which are constituted by characters which can not be read-out by optical reading devices.

In order to read-out or detect the bar codes, as well as to properly decode them, there are at present used read-out devices made in the form of an optical pen, which must be scanned along the region supporting the bar codes, transversely of the bars constituting the coded inscription.

In order to detect the bar codes there are also used the so-called scanners, having a width which is substantially equal or slightly greater than the width of the bar code printed on the sheet to be read-out.

These prior devices for reading out bar codes, however, have the drawback that they are adapted to read-out bar codes having a very reduced width or extension.

Moreover, the mentioned prior bar code read-out devices are not adapted to read-out complex wordings susceptible to be associated with a great portion of the surface of a sheet and which, accordingly, require a coordinated and general viewing, according to a set succession, in order to be properly detected.

In fact, in the case of inscriptions made of rather complex bar codes, it is not possible to use read-out devices of the optical pen type, or conventional static scanners, since a partial read-out of the optically detectable characters written on a document would alter in a substantial manner the detected data.

### SUMMARY OF THE INVENTION

Accordingly, the aim of the present invention is to overcome the above mentioned problem, by providing an apparatus adapted to properly read-out optically detectable characters, as re-producedon sheet elements, even in the case in which these characters occupy a great portion of the surface of the sheet or document.

Within the scope of the above mentioned aim, a main object of the present invention is to provide such an apparatus which is specifically designed for sequentially selectively reading out, according to a preset logic order, exclusively the optical characters written on a document, by extrapolating them from the assembly of the printed characters reproduced on the document.

Another object of the present invention is to provide such an apparatus which has a high read-out reliability even in the case of wordings made of very complex optically detectable characters.

Yet another object of the present invention is to provide such a read-out apparatus which can be used in a very simple and easy manner.

According to one aspect of the present invention, the above mentioned aim and objects, as well as yet other objects, which will become more apparent hereinafter, are achieved by an apparatus for reading out optically detectable characters, reproduced on sheets or parts thereof, characterized in that said apparatus comprises a supporting panel, for supporting the sheet to be read-out, said supporting panel being made of a clear material, and, under said supporting panel, being provided a read-out device, comprising a decoding apparatus, facing said supporting panel, and mounted on a supporting element which can be controllably driven so as to scan substantially the overall surface of said sheet supported on said supporting panel.

### BRIEF DESCRIPTION OF THE DRAWINGS

Further characteristics and advantages of the read-out apparatus according to the present invention will become more apparent thereinafter from the following detailed disclosure of a preferred, though not exclusive embodiment of said apparatus which is illustrated, by way of an indicative, but not limitative, example in the figures of the accompanying drawings, where:

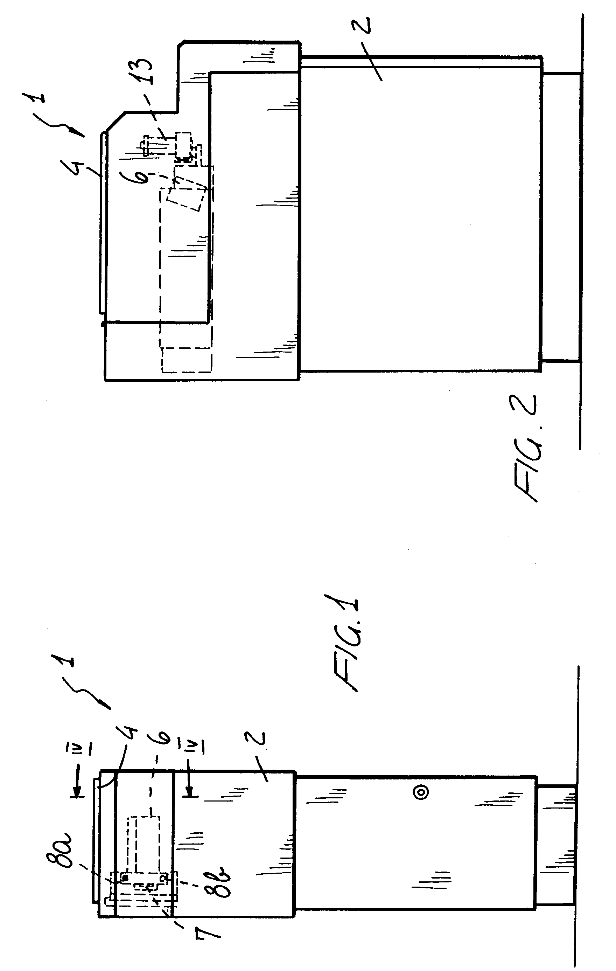

Figure 1 is a front elevation view illustrating the apparatus according to the invention;

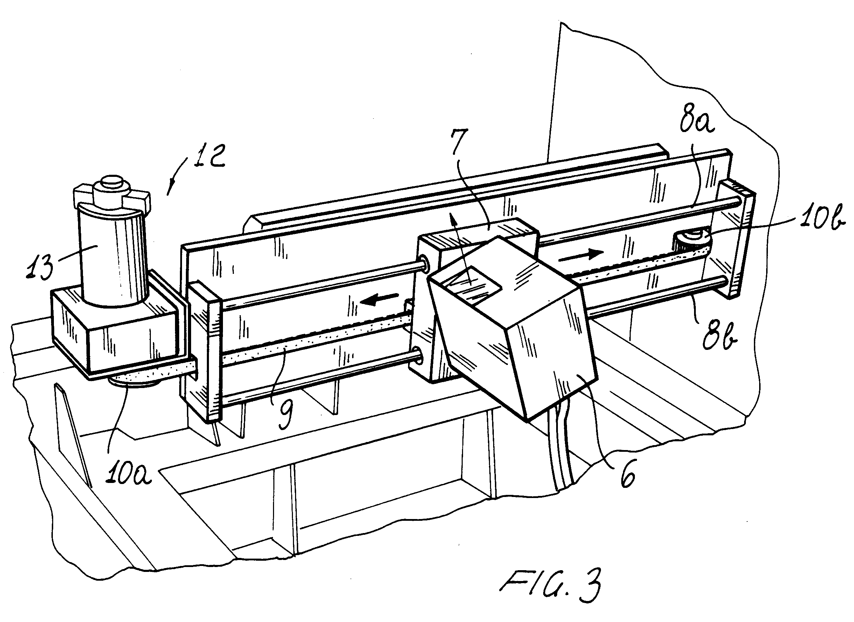

Figure 2 is a side elevation view of the apparatus according to the invention;
Figure 3 is a perspective view illustrating the read-out apparatus or device and related supporting element;

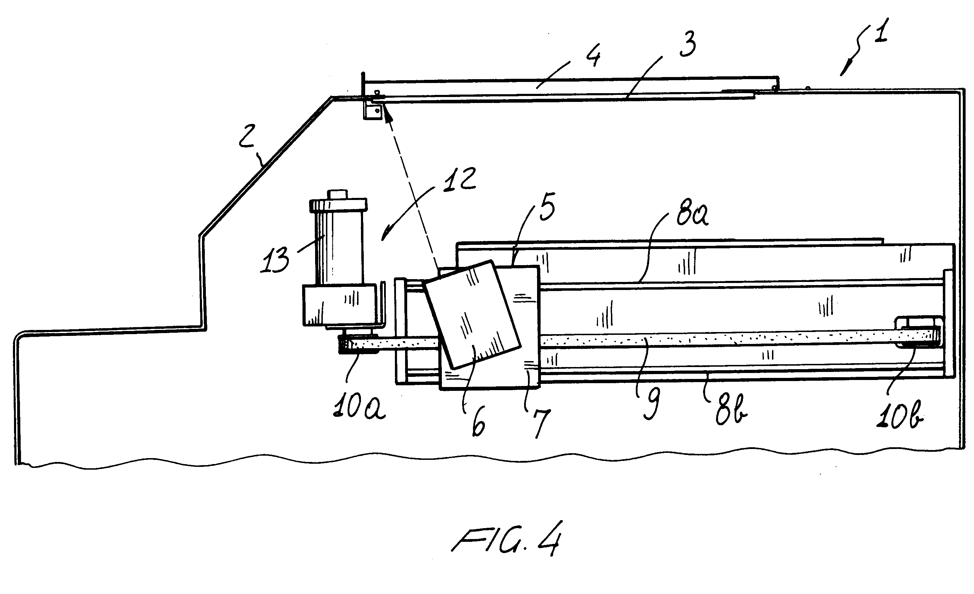

Figure 4 is a cross-sectional view of Figure 1, substantially taken along the section line IV-IV, and clearly illustrating the operation of the read-out apparatus according to the present invention; and

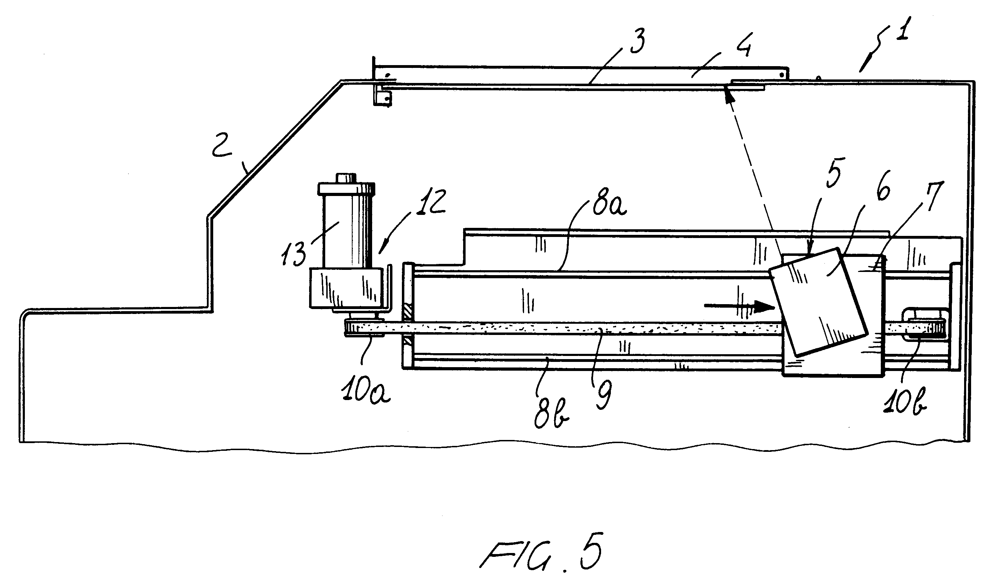

Figure 5 is a cross-sectional view like that of Figure 4, and relating to another operation condition of the subject read-out apparatus.

### DESCRIPTION OF THE PREFERRED EMBODIMENT

With reference to the number references of the above mentioned figures, the read-out apparatus according to the present invention, which has been generally indicated at the reference number 1, comprises a casing or carter 2 defining, at the top thereof, a supporting panel 3, which substantially horizontally extends, and being formed by a clear or transparent material plate, thereon can be supported a sheet element to be read-out, the side of said sheet bearing the optically detectable characters facing against the supporting panel 3.

At the top, with respect to the supporting panel 3, there is provided a covering element 4, which can be upwardly raised above the supporting panel 3, in order to allow the sheet to be read-out to be arranged on the supporting panel 3.

Inside the casing 2, under the supporting panel 3, there is provided a read-out device 5, comprising a decoder apparatus 6, facing the overlaying supporting panel 3, and mounted on a supporting element 7.

The latter, in particular, can be controllably driven, in order to scan, with the view field of the decoder apparatus 6, substantially the overall surface of the sheet supported on the support-panel 3, to allow the decoder apparatus to detect all the inscriptions, made of optically detectable characters, reproduced on the sheet being read-out.

More specifically, the decoder apparatus 6 comprises a laser beam emitter and an optical detectable character detector, which are affected by the emitted laser light beam.

In particular, the laser beam will affect a strip of the sheet, having a width substantially corresponding to that of the sheet and a height corresponding to the height of the conventional bar code inscriptions.

In particular, the supporting element 7 is slidably mounted on a pair of guides 8a and 8b extending, parallel to one another, in the horizontal direction under the supporting panel 3 and in the length direction of the sheet.

The guides 8a and 8b can merely comprise a pair of sliding shafts, which are affixed, at their end portions, to the apparatus framework.

As shown, the supporting element 7 is connected to the leg of a toothed belt 9 entrained on a pair of pulleys 10a and 10b, spaced from one another, and having their axes vertically arranged.

In particular, the pulley 10a is connected to the output shaft of a motor-reducing which is driven by an electric motor 13, preferably a d.c. current electric motor, of a synchronous type.

The displacement of the supporting element 7 along the guides 8a and 8b, in particular, is controlled by means of limit devices, for example photocells, of known type and which for simplicity have not been shown, and which are adapted to cause the electric motor 13 to stop as the view field of the detector has arrived at the start or at the end of the sheet being read-out.

The decoder apparatus 6 can be connected to a computer, so programmed as to order the data detected by the detector of the decoding apparatus, so as to allow to properly reconstruct the inscriptions made of optically detectable characters, even in the case in which the characters are arranged at different regions of the sheet.

The apparatus for reading-out optically detectable characters according to the present invention operates as follows.

The sheet to be read-out is arranged on the supporting panel 3 with its side bearing the optically detectable characters facing said supporting panel 3.

Then, the read-out device 5 will start its reading operation by emitting a laser light strip, involving substantially the overall width of the sheet and which, by operating the electric motor 13 driving the supporting element 7 along the guides 8a and 8b, is caused to progressively scan the overall length of the sheet.

The signals detected by the detector of the read-out device will be re-ordered and decoded by the computer connected to the read-out device.

Thus, all of the information printed on the sheet in the form of bar codes will be properly detected and decoded.

In this connection it should be apparent that, due to the fact that the read-out device is driven with a constant speed, which can be possibly reduced as the codes are not printed in a perfect manner, it is possible to obtain a read-out of high reliability.

From the above disclosure and from an observation of the figures of the accompanying drawings, it should be apparent that the invention fully achieves the intended objects.

In particular, the fact is to be pointed out that a read-out apparatus has been provided which is specifically adapted to read-out optically detectable characters, or bar codes, with a high accuracy, even in the case in which said bar codes are arranged at different regions of a sheet or document.

The disclosed apparatus is susceptible to several variations and modifications all of which will come within the scope of the inventive idea.

Moreover, all of the details can be replaced by other technically equivalent elements.

In practicing the invention, the used materials, as well as the contingent size and shapes, can be any, depending on requirements.

## Claims

1. An apparatus for reading out optically detectable characters, reproduced on sheets or parts thereof, **characterized in that** said apparatus comprises a supporting panel, for supporting the sheet to be read-out, said supporting panel being made of a clear material and, under said supporting panel, being provided a read-out device, comprising a decoding apparatus, facing said supporting panel, and mounted on a supporting element which can be controllably driven so as to scan substantially the overall surface of said sheet supported on said supporting panel.

2. An apparatus, according to Claim 1, **characterized in that** said decoder apparatus comprises a laser light beam emitter and an optical character detector affecting substantially a strip having a width equal to the width of the sheet.

3. An apparatus, according to the preceding claims, **characterized in that** said supporting element is slidable mounted on guides extending under said panel and arranged in the length direction of said sheet supported on said panel, means being provided for driving said supporting element along said guides.

4. An apparatus, according to one or more of the preceding claims, **characterized in that** said driving means comprise a toothed belt entrained on two pulleys having axes perpendicular to said guides, said toothed belt having a leg thereof coupled about the supporting element and at least one of said pulleys being rotatively driven for entraining, in a direction or in the other, said toothed belt.

5. An apparatus, according to one or more of the preceding claims, **characterized in that** said apparatus further comprises limit devices for controlling the displacement of said supporting element.

6. An apparatus, according to one or more of the preceding claims, **characterized in that**, on the top of said supporting panel, there is provided a movable covering element.

7. An apparatus, according to one or more of the preceding claims, **characterized in that** said apparatus further comprises a computer, connected to the decoder apparatus, for ordering the data detected by the detector.

8. An apparatus, according to one or more of the preceding claims, **characterized in that** said supporting panel and said guides are horizontally arranged.

9. An apparatus, according to one or more of the preceding claims, **characterized in that** at least one of said pulleys is driven by a synchronous electric motor of the D.C. current type.
